# FASCICULE DE BREVET EUROPEEN

(11) **EP 1 621 431 B1**
(45) Date de publication et mention de la délivrance du brevet: **15.11.2006**
(21) Numéro de dépôt: 04291894.6
(22) Date de dépôt: 26.07.2004
(51) Int. Cl.: B60T 8/00, B60T 8/26

(54) **Procédé et dispositif de répartition avant/arrière du freinage pour un véhicule en décélération**
Verfahren und Vorrichtung zur Bremskraftverteilung vorne/hinten für ein Kraftfahrzeug
Method and system for front/rear brake force distribution for a motor vehicle

(43) Date de publication de la demande: 01.02.2006
(73) Titulaire: Delphi Technologies, Inc., Troy, MI 48007 (US); Peugeot Citroen Automobiles SA, 78140 Vélizy Villacoublay (FR)
(72) Inventeur: Alvarez, Belen, 75015 Paris (FR); Groult, Xavier, 95470 Survilliers (FR); Blaise, Philippe, 25490 Dampiere les Bois (FR)
(74) Mandataire: Abello, Michel

(56) Documents cités:
- EP-A- 1 125 809
- EP-A- 1 388 475
- EP-A- 1 428 738
- US-A1- 2001 038 242
- US-B1- 6 460 941

## Description

L'invention a pour domaine la gestion du freinage d'un véhicule équipé d'un système de freinage découplé au sens où l'actionnement des étriers de frein en vue de l'application d'une force de freinage sur les roues est découplé de l'enfoncement de la pédale de frein par le conducteur. Plus particulièrement, l'invention a pour domaine la gestion du freinage pour réduire le mouvement de tangage de la caisse du véhicule lors d'une phase de décélération de ce dernier, telle que divulguée dans EP1388475.

Lors d'un freinage en ligne droite, la force de freinage sur la roue est transmise à la route. La réaction de la route sur le véhicule génère un moment autour d'un axe latéral passant par le centre de gravité du véhicule. Ce moment appliqué sur les masses suspendues, i.e. la caisse, entraîne un transfert de charge d'arrière en avant conduisant à un mouvement de tangage. En conséquence, l'axe longitudinal du véhicule fait un angle avec l'horizontale. Cet angle de tangage est perçu par les passagers et dégrade le confort des ces derniers.

Il y a donc un besoin pour un système de freinage mettant en oeuvre un procédé permettant de corriger, tout au moins partiellement, les inconvénients précités.

L'invention a pour objet un procédé de freinage d'un véhicule, le véhicule étant équipé d'un système de freinage comportant des étriers de frein aptes à être actionnés en fonction d'une force de freinage cible et dans lequel au moins l'actionnement des étriers équipant les roues arrière est découplé de l'enfoncement d'une pédale de frein, enfoncement correspondant à une force de freinage souhaitée par le conducteur, ledit procédé étant caractérisé en ce qu'il comporte les étapes consistant à :
- Détecter une condition logique d'entrée comportant au moins un test de ligne droite et un test de freinage, le test de ligne droite étant vérifié lorsque l'accélération latérale instantanée du véhicule est inférieure à une accélération seuil et le test de freinage étant vérifié lorsque la pédale de frein est actionnée par le conducteur ; et tant que la condition logique est vérifiée,
- Déterminer une force de freinage de base à partir de la force de freinage souhaitée ;
- Calculer une force de freinage de base corrigée, en corrigeant la force de freinage de base de sorte que la force de freinage de base corrigée soit supérieure à la force de freinage de base ; et,
- Appliquer la force de freinage de base corrigée en tant que force de freinage cible pour les roues arrière, de sorte que le mouvement de tangage dudit véhicule soit réduit lors du freinage en ligne droite.

Ladite force de freinage de base étant corrigée en lui appliquant un gain de base multiplicatif de manière à obtenir une force de freinage de base corrigée, et ledit gain de base étant une fonction croissante d'une vitesse instantanée du véhicule. De préférence, la vitesse instantanée dont dépend le gain de base est la vitesse instantanée lors d'une modification de la force de freinage souhaitée par le conducteur. De préférence, le gain de base est proche de l'unité en dessous d'une vitesse seuil inférieure. De préférence encore, le gain de base est égal à un gain de saturation au delà d'une vitesse seuil supérieure. Dans le mode de réalisation préféré, le procédé comporte une étape de modulation de la force de freinage de base corrigée, la modulation étant fonction de la valeur instantanée d'une variable traduisant le glissement des roues arrière.

L'invention a également pour objet un logiciel de freinage contenant des instructions propres à être lues et stockées sur un support, les instructions étant exécutables par un ordinateur hôte, caractérisé en ce que le logiciel met en oeuvre le procédé décrit ci-dessus.

L'invention a également pour objet un contrôleur de freinage programmable, apte à mettre en oeuvre le procédé décrit ci-dessus, dans un véhicule équipé d'un système de freinage comportant des étriers de frein aptes à être actionnés en fonction d'une force de freinage cible et dans lequel au moins l'actionnement des étriers équipant les roues arrière est découplé de l'enfoncement d'une pédale de frein, enfoncement correspondant à une force de freinage souhaitée par le conducteur, le contrôleur comportant un espace mémoire apte à stocker les instructions d'un logiciel, un calculateur apte à exécuter les instructions et une interface d'entrée/sortie connectable en entrée à une pluralité de capteurs dont est équipé le véhicule et en sortie à au moins une unité d'actionnement d'étrier, caractérisé en ce que le contrôleur est programmé pour comporter :
- un moyen de détection d'une condition logique d'entrée apte à tester une condition de ligne droite consistant à vérifier si une accélération latérale obtenue au moyen des capteurs est inférieure à une accélération latérale seuil, et une condition de freinage consistant à vérifier si la pédale de frein est enfoncée ;
- Un moyen de détermination d'une force de freinage de base à partir de la force de freinage souhaitée ;
- Un moyen de calcul d'une force de freinage de base corrigée apte à corriger la force de freinage de base de manière à ce que la force de freinage de base corrigée soit supérieure à la force de freinage de base ; et,
- un moyen d'émission de la force de freinage corrigée en tant que force de freinage cible pour les roues arrière, pour que le mouvement de tangage dudit véhicule soit réduit lors de la décélération.

De préférence, le contrôleur comporte un moyen de modulation apte à appliquer une modulation à la force de freinage de base corrigée pour obtenir une force de freinage de référence, la modulation étant une fonction d'une variable traduisant le glissement des roues arrière, et la force de freinage de référence étant émise en tant que force de freinage cible pour les roues arrière.

L'invention a également pour objet un système de freinage destiné à équiper un véhicule comportant une pluralité de capteurs, un contrôleur de freinage, des unités d'actionnement d'étrier de frein et au moins des étriers de frein électromécaniques équipant les roues arrière dudit véhicule caractérisé en ce que le contrôleur de freinage est un contrôleur de freinage tel que celui décrit ci-dessus.

Enfin, l'invention a pour objet un véhicule comportant un système de freinage caractérisé en ce que le système de freinage est un système de freinage tel que celui décrit ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :

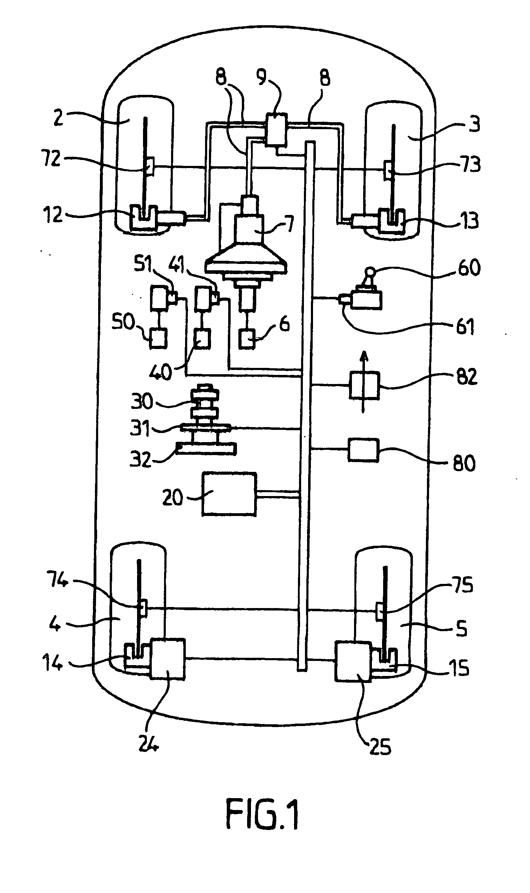

- la figure 1 représente schématiquement un véhicule équipé d'un système de freinage hybride ;
- les figures 2A, 2B et 2C représentent, sous la forme d'organigrammes, les différentes étapes d'un mode de réalisation du procédé selon l'invention ;
- la figure 3 représente une courbe donnant le gain de base en fonction de la vitesse du véhicule ;
- la figure 4 représente les forces de freinage respectivement appliquées sur les roues avant et arrière au cours d'un essai dans lequel la gestion du freinage selon le procédé de l'invention est active ; et,
- la figure 5 représente les vitesses respectives des roues avant et arrière au cours du temps, lors de l'essai ayant conduit à la figure 4.

Pour limiter le mouvement de tangage de la caisse du véhicule, le procédé selon l'invention consiste à appliquer une force de freinage sur les roues arrière supérieure à la force de freinage souhaitée par le conducteur appuyant sur la pédale de frein pour décélérer. Cette force de freinage supplémentaire conduit à l'application sur la caisse d'un moment supplémentaire permettant de redresser le nez du véhicule et d'annuler ou tout au moins de réduire l'angle de tangage.

Puisque la force de freinage effectivement appliquée sur les roues arrière ne correspond pas à la force de freinage souhaitée par le conducteur, le procédé selon l'invention ne peut être mis en oeuvre que dans un véhicule comportant un système de freinage découplé de l'actionnement de la pédale de frein, tout au moins pour l'actionnement des étriers de frein équipant les roues arrière. Le véhicule dans lequel l'invention est mise en oeuvre est de préférence un véhicule comportant un système de freinage hybride, mais peut également être un véhicule comportant un système de freinage entièrement géré électroniquement.

Un véhicule 1 comporte deux roues avant 2 et 3 et deux roues arrière 4 et 5. Le système de freinage hybride comporte une pédale de frein 6 reliée à un maître cylindre 7. Lorsque la pédale de frein 5 est enfoncée par le conducteur souhaitant que le véhicule soit freiné, le maître cylindre 7 génère une surpression hydraulique qui est propagée via l'unité hydraulique 9 et les canalisations 8 vers les étriers de frein hydrauliques 12 et 13 équipant respectivement les roues avant 2 et 3.

Les roues arrière 4 et 5 sont respectivement équipées d'étriers électromécaniques 14 et 15. Lorsque le conducteur appuie sur la pédale de frein 6, l'unité hydraulique 9 émet également un signal électrique correspondant à la surpression générée par le maître cylindre 7, indiquant la valeur de la force freinage F_{c} souhaitée par le conducteur. Il est à noter que la valeur souhaitée de la force de freinage F_{C} est celle qui est effectivement appliquée au deux roues avant.

Le signal électrique S est appliqué sur une entrée d'un contrôleur de freinage 20. Le contrôleur de freinage 20 comporte au moins un calculateur et une mémoire. La mémoire est apte à stocker les instructions de différents programmes. Le calculateur est apte à exécuter ces instructions. Le contrôleur 20 comporte une interface d'entrée/sortie permettant en entrée l'acquisition de signaux provenant de différents capteurs et le stockage des valeurs correspondantes dans des espaces mémoire prédéfinis, et permettant en sortie l'émission de signaux en fonction de valeurs lues dans des espaces mémoire prédéfinis.

En réponse au signal S, le contrôleur 20 détermine si la pédale de frein est enfoncée (par exemple S différent de la valeur nulle). Puis, si tel est le cas, le contrôleur 20 calcule périodiquement les forces de freinage cibles devant être respectivement appliquées par les étriers 14 et 15. Le contrôleur 20 émet en sortie des signaux de commande correspondant aux forces de freinage cibles en direction des actionneurs déportés 24 et 25 régulant l'actionnement des étriers arrière.

Plus précisément et de manière connue, le calcul par le contrôleur 20 d'une force de freinage cible consiste à déterminer une force de freinage de base puis à appliquer différentes fonctions afin de moduler la valeur du freinage de base. Par exemple une fonction d'anti-patinage des roues corrige la force de freinage de base en fonction de la valeur du glissement instantané des roues. Par exemple encore une fonction de contrôle de stabilité peut augmenter la force de freinage de base sur une des roues pour augmenter la stabilité du véhicule engagé dans une courbe. Chacune des ces fonctions, déclanchées en fonction de conditions d'entrée particulières, conduisent au calcul d'une force de freinage de référence ainsi que d'un drapeau indiquant le niveau de priorité de la force de freinage de référence ainsi calculée. Finalement, un dispositif d'arbitrage affecte la valeur de la force de freinage de référence ayant la priorité la plus élevée à la force de freinage cible à émettre en direction de l'étrier correspondant.

Par ailleurs, le véhicule 1 est équipé d'une pluralité de capteurs permettant de mesurer la valeur instantanée de différentes variables, de manière à définir un état instantané du véhicule. La colonne de direction 30 est, par exemple, équipée d'un capteur 31 permettant de mesurer l'angle de braquage que le conducteur donne au volant 32. La pédale d'accélération 40 comporte un capteur 41 permettant de mesurer le degré d'enfoncement de la pédale d'accélération. La pédale d'embrayage 50 comporte un capteur 51 permettant de déterminer l'état de l'embrayage : état débrayé dans lequel le moteur est couplé aux roues motrices, état embrayé dans lequel le moteur est découplé des roues motrices, et état de patinage intermédiaire dans lequel le couple moteur n'est que partiellement appliqué aux roues motrices. Enfin, le véhicule 1, s'il comporte une boîte de vitesses manuelle 60, peut être équipé d'un capteur 61 permettant de connaître la position du levier de vitesses. Le véhicule 1 comporte, en outre, des capteurs permettant de déterminer l'état cinématique du véhicule. Chacune des roues 2-5 est équipée d'un capteur de vitesse de roue 72-75 permettant de mesurer la vitesse instantanée de rotation de la roue. Cette information permet au contrôleur 20 de calculer une vitesse instantanée V du véhicule. Pour mesurer l'accélération, le véhicule comporte par exemple un capteur d'accélération latérale 80 et un capteur d'accélération longitudinale 82. Les différents capteurs décrits sont connectés au contrôleur 20, via un réseau supportant par exemple le protocole CAN-Bus.

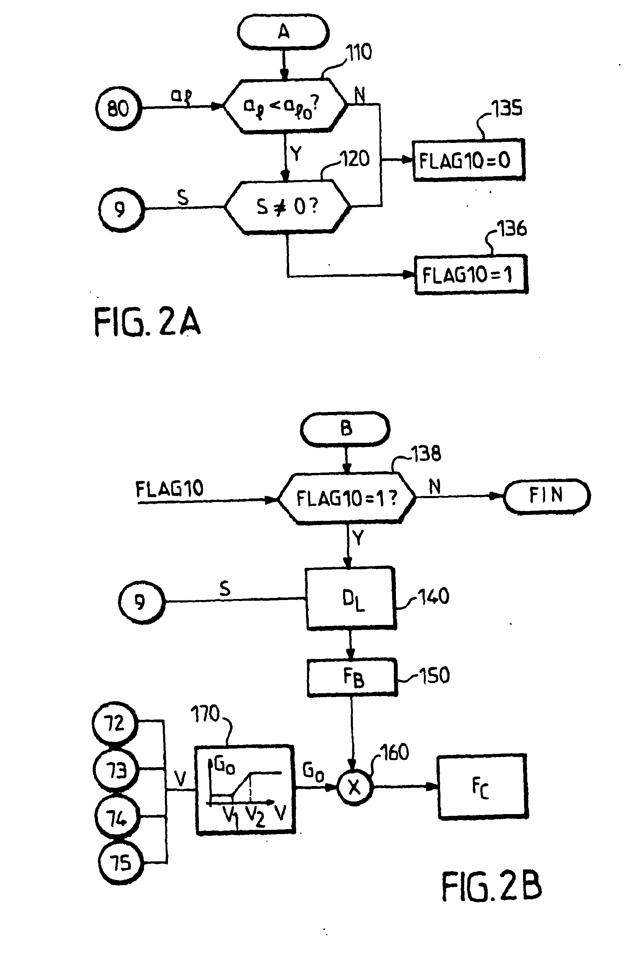

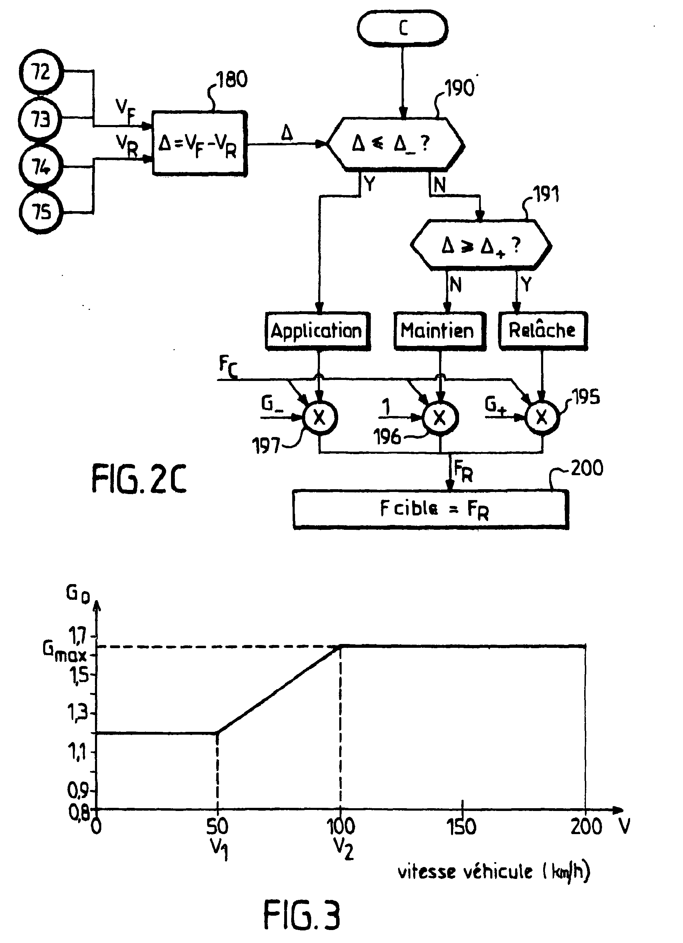

En se référant maintenant aux figures 2A, 2B et 2C, les différentes étapes du procédé selon l'invention vont être décrites. De préférence, le procédé est mis en oeuvre par logiciel. Les instructions du logiciel sont mémorisées dans un espace mémoire du contrôleur 20 et sont exécutées par le processeur du contrôleur 20.

Sur la figure 2A, le procédé comporte l'exécution d'un module A permettant de déterminer une condition logique d'entrée permettant de savoir si l'état instantané du véhicule correspond à un état dans lequel un surfreinage peut être appliqué. La réduction de l'angle de tangage n'est effectuée que lorsque le véhicule est en ligne droite et dès que la pédale de frein est actionnée. La condition logique d'entrée comporte donc un test de ligne droite 110 consistant à déterminer si la valeur instantanée de l'accélération latérale a₁, mesurée par le capteur 80, est inférieure à une accélération latérale seuil a₁₀ ayant une valeur réduite par exemple de 0,02g. La condition logique d'entrée comporte également un test de freinage 120 consistant à déterminer si le signal S émis par le capteur 9 a une valeur non nulle indiquant l'enfoncement de la pédale de frein 6. Lorsque l'un des tests de ligne droite et de freinage n'est pas vérifié, la valeur nulle est affectée (étape 135) à un drapeau binaire FLAG10 signifiant ainsi que l'état instantané du véhicule est incompatible avec un surfreinage. Lorsque le test de ligne droite et le test de freinage sont simultanément vérifiés, la condition logique d'entrée est elle-même vérifiée, et le drapeau binaire FLAG10 passe de la valeur nulle à la valeur unité (étape 136) indiquant que l'état du véhicule est compatible avec l'application d'une force de freinage arrière supplémentaire dont la détermination va maintenant être décrite en détail. Les tests de ligne droite et de freinage sont effectués périodiquement. La valeur instantanée du drapeau FLAG10 est stockée dans la mémoire du contrôleur 20.

La figure 2B représente un module B permettant le calcul d'une force de freinage de base corrigée. A l'étape 138, la valeur actuelle du drapeau FLAG10 est comparée à l'unité. Dès que la condition logique d'entrée est vérifiée, i.e. FLAG10=1, le procédé passe à l'étape 140 d'évaluation de la décélération longitudinale souhaitée D_{L}. La décélération D_{L} est déterminée à partir de l'amplitude du signal S transmis par le capteur 9. A partir de la décélération D_{L}, une force de freinage de base F_{B} est calculée à l'étape 150. La force de freinage de base F_{B} correspond à la force qu'il faudrait appliquer à la fois sur les roues avant et sur les roues arrière pour que la décélération instantanée du véhicule corresponde à la décélération D_{L} souhaitée par le conducteur actionnant la pédale de frein 6. Le calcul, par ailleurs connu, de la force de freinage de base F_{B} fait intervenir les caractéristiques particulières du véhicule considéré comme la masse de la caisse, la raideur des suspensions, etc.

L'invention étant mise en oeuvre dans un système de freinage hybride, la force de freinage de base F_{B} sert au calcul de la force de freinage cible F_{cible} à appliquer sur les roues arrière. Si l'invention était mise en oeuvre dans un système de freinage complètement géré électroniquement, la force de freinage de base F_{B} permettrait également de calculer la force de freinage cible à appliquer sur les roues avant.

Pour réduire l'angle de tangage, un gain de base G₀ est appliqué à la force de freinage de base F_{B} de manière à obtenir une force de freinage de base corrigée F_{C} (étape 160). Pour cela, la vitesse longitudinale V instantanée, calculée à partir des vitesses angulaires de rotation de chacune des roues mesurées par les capteurs 72 à 75, est déterminée. A l'étape 170, une courbe de calibration permet de connaître le gain de base G₀ à appliquer en fonction de la vitesse longitudinale V. Une telle courbe de calibration est représentée sur la figure 3. La courbe de calibration est une fonction croissante de la vitesse V. Dans le mode de réalisation préféré, la courbe de calibration est une fonction continue par morceaux : lorsque la vitesse V est inférieure à une vitesse seuil inférieure V₁, la correction à apporter à la force de freinage de base est à la fois réduite et constante. Le gain de basse G₀ est proche de l'unité et vaut par exemple 1,2 pour cette gamme de vitesses. En effet, aux faibles vitesses, l'angle de tangage est faible. Il ne gêne que très faiblement le conducteur. Par ailleurs, un actionnement trop important des freins arrière serait perçu par le conducteur et constituerait une source d'inconfort. En revanche, lorsque la vitesse V est supérieure à une vitesse seuil supérieure V₂, le gain de base G₀ est un gain constant de saturation Gₘₐₓ. A titre d'exemple, sur la figure 3, Gₘₐₓ vaut 1,6. Enfin, lorsque la vitesse V est entre la vitesse seuil inférieure V₁ et la vitesse seuil supérieure V₂, le gain de base G₀ est une fonction linéaire croissante de la vitesse. D'autres valeurs peuvent être affectées aux paramètres de la courbe de calibration de manière à donner un caractère particulier au véhicule. En variante, d'autres formes de courbe de calibration peuvent être utilisées. La force de freinage de base corrigée F_{c} est supérieure à la force de base F_{B} le gain de base étant supérieur à l'unité quelle que soit la valeur de la vitesse V.

Puisque l'on souhaite que la force de freinage supplémentaire soit constante lorsque la décélération souhaitée D_{L} est constante, le gain de base G₀ n'est déterminé qu'à chaque modification de la valeur de la décélération D_{L}. Ceci revient à prendre en compte la vitesse longitudinale V uniquement lors d'un changement de la décélération D_{L}.

La force de base corrigée F_{c} ainsi calculée pourrait être appliquée directement en tant que force de freinage cible F_{cible}. Pourtant, lors de la décélération et du fait de l'angle de tangage, le transfert de charge de l'arrière vers l'avant a pour conséquence la réduction des forces normales de réaction de la route sur les roues arrière. Ainsi, si un freinage trop important est appliqué sur les roues arrière, il y a un risque de saturation conduisant au blocage puis au glissement des roues arrière. Or, si les roues arrière se bloquent, le véhicule se trouve dans une situation instable. Pour un véhicule qui en serait équipée, la fonction d'anti-blocage des roues (ABS) se déclenche, ce qui dégrade le confort des passagers. Le glissement des roues arrière doit donc être surveillé lors de l'application d'une force de freinage supplémentaire. Il faut appliquer une force de freinage qui soit la plus élevée possible pour réduire au maximum l'angle de tangage tout en n'étant pas trop importante pour que le glissement des roues arrière soit maintenu à une valeur raisonnable. Par exemple, dans ce qui suit, la différence de vitesse entre les roues avant et les roues arrière, grandeur équivalente au glissement, est de quelques kilomètres par heures (km/h).

En se reportant à la figure 2C, il s'agit donc de moduler la force de freinage de base corrigée F_{c} de manière à ne pas provoquer un glissement trop important. A l'étape 180, le glissement △ est calculé par différence entre les vitesses instantanées avant V_{F} et arrière V_{R} respectivement obtenues par moyen des vitesses des roues avant (obtenues grâce aux capteurs 72 et 73) et des vitesses des roues arrière (obtenue grâce aux capteurs 74 et 75).

A l'étape 190, le glissement instantané Δ est comparé à un glissement seuil inférieur Δ₋ valant par exemple -0,5 km/h. Si le glissement instantané Δ est inférieur à Δ₋, le système entre dans un mode d'application décrit ci-dessous. Dans le cas contraire, le glissement instantané Δ est comparé à un glissement seuil supérieur Δ₊ valant par exemple 2 km/h. Si le glissement instantané Δ est supérieur à Δ₊, le système entre dans un mode de relâchement décrit ci-dessous. Enfin dans le cas contraire, le glissement instantané Δ étant compris entre Δ₋ et Δ₊, le système entre dans un mode de maintien décrit ci-dessous.

Si le système est en mode Relâchement, cela signifie que le glissement est trop important et que l'amplitude de la force de freinage de base corrigée F_{c} doit être réduite. Pour ce faire, à l'étape 195, la force de freinage corrigée F_{c} est multipliée par un gain de réduction G₊ qui est inférieur à l'unité. La force de freinage de référence F_{R} ainsi déterminée est inférieure à la force de freinage de base corrigée F_{c}.

En revanche, en mode Actionnement, c'est-à-dire lorsque le glissement Δ est très faible, l'amplitude de la force de freinage corrigée F_{C} peut être augmentée pour corriger autant que possible l'assiette de la caisse. Ainsi, à l'étape 197, la force de freinage corrigée F_{C} est multipliée par un gain d'augmentation G₋ qui est supérieur à l'unité. La force de freinage de référence F_{R} ainsi déterminée est supérieure à la force de freinage de base corrigée F_{C}.

Enfin, en mode Maintien, le glissement étant à un niveau convenable, la force de base corrigée F_{C} n'est pas à modifier. Sur la figure 2C, à l'étape 196, la force de base corrigée F_{C} est multipliée par l'unité pour obtenir la force de freinage de référence F_{R}.

Il est à noter que cette fonction de régulation du freinage en fonction du glissement est par ailleurs connue. Une version simple de cette fonction a été présentée ci-dessus dans laquelle des gains multiplicatifs constants ont été appliqués à la force de freinage de base corrigée F_{c}. D'autre manière de moduler la force de freinage de base corrigée F_{C} sont possibles. En revanche, les valeurs des seuils de glissement inférieur et supérieur de cette fonction de régulation du freinage de base sont adaptées au cas particulier de l'accroissement de la force de freinage de base pour réduire l'angle de tangage.

A l'étape 200, la force de freinage de référence F_{R} est émise en tant que force de freinage cible F_{cible} vers chacun des actionneurs 25 et 26 des étriers de freins électromécaniques équipant les roues arrière. A ce stade, les forces de freinage cible pour les roues arrière droite et gauche sont identiques. Eventuellement, les actionneurs 24 et 25 peuvent modifier la valeur de la force de freinage cible qui leur est adressée en fonction de conditions particulières à chacune des roues.

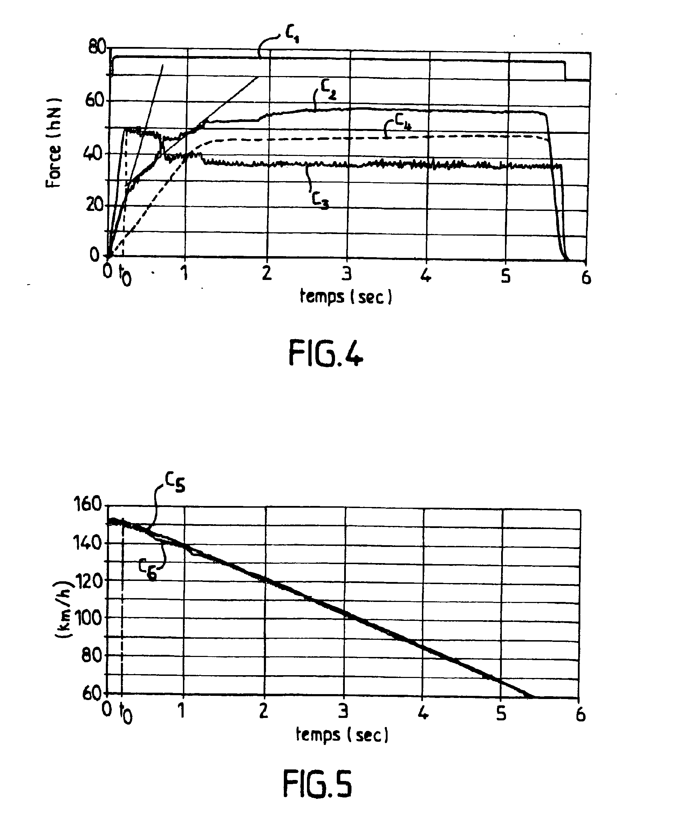

Les figures 4 et 5 reproduisent des courbes représentant l'évolution temporelle de grandeurs cinématiques mesurées au cours d'un essai effectué sur un véhicule mettant en oeuvre le procédé selon l'invention. Sur la figure 4, la courbe C₁ représente la valeur du drapeau FLAG10. Au début de l'essai, la valeur de FLAG10 est nulle, ce qui signifie que le logiciel n'est pas exécuté. Au bout de quelques dixièmes de seconde, la valeur du drapeau FLAG10 passe à la valeur unité, ce qui signifie que l'on rentre dans la gestion du surfreinage arrière. La courbe C₂ représente l'effort appliqué sur l'une des roues arrière ; la courbe C₃ représente l'effort sur l'autre roue arrière. Les variations sur les forces de serrage entre ces deux courbes représentent la modulation des efforts pour optimiser le freinage sur le train arrière. On constate que la force de freinage augmente rapidement au début de l'essai pour se maintenir ensuite autour de 4000 newtons. Au bout de 5,5 secondes, le conducteur relâche totalement la pédale de frein. Ceci conduit le drapeau FLAG10 à reprendre une valeur nulle et la force de freinage à être annulée. La courbe C₄, représentée en pointillés, donne la force de freinage qui serait appliquée sur les roues arrière d'un véhicule équivalent ne mettant pas en oeuvre le procédé selon l'invention. Les courbes C₂ et C₃ sont au-dessus de la courbe C₄ dès le début de l'essai. Cela signifie qu'un gain de base supérieur à l'unité est appliqué sur la force de serrage de base de manière à augmenter le freinage sur les roues arrière par rapport à ce qu'il serait normalement.

Sur la figure 5, on a représenté la vitesse des roues avant, courbe C₅, et la vitesse des roues arrière, courbe C₆. La différence entre ces deux courbes indique la variable Δ correspondant au glissement. Par exemple, à l'instant t₀, la différence entre la vitesse des roues avant et la vitesse des roues arrière est importante et dépasse la valeur de 2 km/h du glissement seuil supérieur Δ₊. En conséquence, le gain de réduction G₊ est appliqué de manière à ce que la force de freinage de base corrigée F_{c} soit réduite. C'est bien ce que l'on retrouve sur la figure 4 où, à l'instant t₀, les courbes C₂ et C₃ subissent un changement de pente important indiquant un changement du gain de modulation.

Bien que l'invention ait été décrite en liaison avec un mode de réalisation particulier, il est bien évident qu'elle n'y est nullement limitée à celui-ci et qu'elle comprend tous les équivalents techniques des moyens décrits ainsi que leurs combinaisons si ceux- et celles-ci entrent dans le cadre de l'invention, telle que définie dans les revendications.

## Revendications

1. Procédé de freinage d'un véhicule, ledit véhicule étant équipé d'un système de freinage comportant des étriers de frein aptes à être actionnés en fonction d'une force de freinage cible (F_{cible}) et dans lequel au moins l'actionnement des étriers de frein (14, 15) équipant les roues arrière est découplé de l'enfoncement d'une pédale de frein (6), enfoncement correspondant à une force de freinage souhaitée par le conducteur, ledit procédé comportant les étapes consistant à :
- Détecter une condition logique d'entrée comportant au moins un test de freinage (120), ledit test de freinage étant vérifié lorsque ladite pédale de frein est actionnée par le conducteur ; et lorsque ladite condition logique est vérifiée (138),
- Déterminer (140, 150) une force de freinage de base (F_{B}) à partir de la force de freinage souhaitée ;
- Calculer une force de freinage de base corrigée (F_{C}), en corrigeant ladite force de freinage de base de sorte que la force de freinage de base corrigée soit supérieure à la force de freinage de base ; et,
- Appliquer (200) ladite force de freinage de base corrigée en tant que force de freinage cible pour les roues arrière, de sorte que le mouvement de tangage dudit véhicule soit réduit lors du freinage en ligne droite,
**caractérisé en ce que** ladite condition logique d'entrée comporte un test de ligne droite (110), ledit test de ligne droite étant vérifié lorsque l'accélération latérale instantanée (a₁) dudit véhicule est inférieure à une accélération seuil (a₁₀), **en ce que** ladite force de freinage de base (F_{B}) est corrigée en lui appliquant un gain de base (G₀) multiplicatif de manière à obtenir la force de freinage de base corrigée (F_{C}), ledit gain de base (G₀) étant une fonction croissante d'une vitesse instantanée (V) dudit véhicule, et **en ce que** lesdits étapes effectuées lorsque ladite condition logique d'entrée est vérifiée sont effectuées tant que ladite condition logique d'entrée est vérifiée.

2. Procédé selon la revendication 1, **caractérisée en ce que** ladite vitesse instantanée dont dépend ledit gain de base (G₀) est la vitesse instantanée lors d'une modification de la force de freinage souhaitée par le conducteur.

3. Procédé selon la revendication 1 ou la revendication 2, **caractérisé en ce que** ledit gain de base (G₀) est proche de l'unité en dessous d'une vitesse seuil inférieure (V₁).

4. Procédé selon l'une quelconque des revendications 1 à 3, **caractérisé en ce que** ledit gain de base (G₀) est égal à un gain de saturation (Gₘₐₓ) au delà d'une vitesse seuil supérieure (V₂).

5. Procédé selon l'une quelconque des revendications 1 à 4, **caractérisé en ce que** ledit procédé comporte une étape de modulation de ladite force de freinage de base corrigée (F_{C}) pour obtenir une force de freinage de référence (F_{R}), ladite modulation étant fonction de la valeur instantanée d'une variable (Δ) traduisant le glissement des roues arrière, et ladite force de freinage de référence étant émise en tant que force de freinage cible pour les roues arrière, ladite étape de modulation consistant à ne pas modifier ladite force de freinage de base corrigée (F_{C}) lorsque ladite variable (Δ) traduisant le glissement des roues arrière est comprise entre un seuil inférieur (Δ₋) et un seuil supérieur (Δ₊).

6. Procédé selon la revendication 5, ladite étape de modulation consistant à multiplier (197) ladite force de freinage de base corrigée (F_{C}) par un gain d'augmentation (G₋) supérieur à l'unité lorsque ladite variable (Δ) traduisant le glissement des roues arrière est inférieure à un seuil inférieur (Δ₋).

7. Procédé selon la revendication 5 ou la revendication 6, ladite étape de modulation consistant à multiplier (195) ladite force de freinage de base corrigée (F_{C}) par un gain de réduction (G₊) inférieur à l'unité lorsque ladite variable (Δ) traduisant le glissement des roues arrière est supérieure à un seuil supérieur (Δ₊).

8. Logiciel de freinage contenant des instructions propres à être lues et stockées sur un support, lesdites instructions étant exécutables par un ordinateur hôte, **caractérisé en ce que** ledit logiciel met en oeuvre un procédé selon l'une des revendications 1 à 7.

9. Contrôleur de freinage programmable, apte à mettre en oeuvre un procédé selon l'une des revendications 1 à 7, dans un véhicule équipé d'un système de freinage comportant des étriers de frein aptes à être actionnés en fonction d'une force de freinage cible (F_{cible}) et dans lequel au moins l'actionnement des étriers de frein (14, 15) équipant les roues arrière est découplé de l'enfoncement d'une pédale de frein (6), enfoncement correspondant à une force de freinage souhaitée par le conducteur, ledit contrôleur (20) comportant un espace mémoire apte à stocker des instructions d'un logiciel, un calculateur apte à exécuter lesdites instructions et une interface d'entrée/sortie connectable en entrée à une pluralité de capteurs dont est équipé ledit véhicule et en sortie à au moins une unité d'actionnement d'étrier, ledit contrôleur étant programmé pour comporter :
- un moyen de détection d'une condition logique d'entrée (A) apte à tester une condition de freinage (120) consistant à vérifier si ladite pédale de frein est enfoncée ;
- Un moyen de détermination (140, 150) d'une force de freinage de base (F_{B}) à partir de ladite force de freinage souhaitée ;
- Un moyen de calcul (160, 170) d'une force de freinage de base corrigée (F_{C}) apte à corriger ladite force de freinage de base de manière à ce que la force de freinage de base corrigée soit supérieure à la force de freinage de base ; et,
- un moyen d'émission (200) de ladite force de freinage corrigée en tant que force de freinage cible pour les roues arrière, pour que le mouvement de tangage dudit véhicule soit réduit lors de la décélération,
**caractérisé en ce que** ledit moyen de détection d'une condition logique d'entrée (A) est apte à tester une condition de ligne droite (110) consistant à vérifier si une accélération latérale (a₁) obtenue au moyen desdits capteurs est inférieure à une accélération latérale seuil (a₁₀), et **en ce que** ledit moyen de calcul est apte à corriger ladite force de freinage de base en lui appliquant un gain de base (G₀) multiplicatif de manière à obtenir la force de freinage de base corrigée, ledit gain de base (G₀) étant une fonction croissante d'une vitesse instantanée (V) dudit véhicule.

10. Contrôleur de freinage programmable selon la revendication 9, **caractérisé en ce qu**'il comporte un moyen de modulation (195, 196, 197) apte à appliquer une modulation à ladite force de freinage de base corrigée (F_{C}) pour obtenir une force de freinage de référence (F_{R}), ladite modulation étant une fonction d'une variable (Δ) traduisant le glissement des roues arrière, et ladite force de freinage de référence étant émise en tant que force de freinage cible (F_{cible}) pour les roues arrières.

11. Système de freinage destiné à équiper un véhicule comportant une pluralité de capteurs, un contrôleur de freinage (20), des unités d'actionnement d'étriers de frein (24, 25), et au moins des étriers de frein électromécaniques (14, 15) équipant des roues arrière dudit véhicule, **caractérisé en ce que** ledit contrôleur de freinage est un contrôleur de freinage programmable selon la revendication 9 ou la revendication 10.

12. Véhicule comportant un système de freinage **caractérisé en ce que** ledit système de freinage est un système de freinage selon la revendication 11.

## Claims

1. Vehicle braking method, the said vehicle being fitted with a braking system comprising brake callipers capable of being actuated as a function of a target braking force (F_{target}) and in which at least the actuation of the brake callipers (14, 15) fitted to the rear wheels is decoupled from the pressing of a brake pedal (6), the pressing corresponding to a braking force desired by the driver, the said method comprising the steps consisting in:
- detecting an input logic condition comprising at least one braking test (120), the said braking test being verified when the said brake pedal is actuated by the driver; and when the said logic condition is verified (138),
- determining (140, 150) a base braking force (F_{B}) from the desired braking force;
- computing a corrected base braking force (F_{C}), while correcting the said base braking force so that the corrected base braking force is greater than the base braking force; and,
- applying (200) the said corrected base braking force as the target braking force for the rear wheels, so that the pitching motion of the said vehicle is reduced during straight line braking,
**characterized in that** the said input logic condition comprises a straight line test (110), the said straight line test being verified when the instantaneous lateral acceleration (a₁) of the said vehicle is less than a threshold acceleration (a₁₀), and **in that** the said base braking force (F_{B}) is corrected by applying thereto a multiplicative base gain (G₀) so as to obtain the corrected base braking force (F_{C}), the said base gain (G₀) being an increasing function of an instantaneous velocity (V) of the said vehicle, and **in that** the said steps carried out when the said input logic condition is verified are carried out provided that the said input logic condition is verified.

2. Method according to Claim 1, **characterized in that** the said instantaneous velocity on which the said base gain (G₀) depends is the instantaneous velocity during a modification of the braking force desired by the driver.

3. Method according to Claim 1 or Claim 2, **characterized in that** the said base gain (G₀) is close to unity below a lower threshold velocity (V₁).

4. Method according to any one of Claims 1 to 3, **characterized in that** the said base gain (G₀) is equal to a saturation gain (Gₘₐₓ) beyond a higher threshold velocity (V₂).

5. Method according to any one of Claims 1 to 4, **characterized in that** the said method comprises a step of modulating the said corrected base braking force (F_{C}) to obtain a reference braking force (F_{R}), the said modulation being a function of the instantaneous value of a variable (Δ) reflecting the slippage of the rear wheels, and the said reference braking force being transmitted as a target braking force for the rear wheels, the said modulation step consisting in not modifying the said corrected base braking force (F_{C}) when the said variable (Δ) reflecting the slippage of the rear wheels lies between a lower threshold (Δ₋) and an upper threshold (Δ₊).

6. Method according to Claim 5, the said modulation step consisting in multiplying (197) the said corrected base braking force (F_{C}) by a positive gain (G₋) of greater than unity when the said variable (Δ) reflecting the slippage of the rear wheels is less than a lower threshold (Δ₋).

7. Method according to Claim 5 or Claim 6, the said modulation step consisting in multiplying (195) the said corrected base braking force (F_{C}) by a negative gain (G₊) of less than unity when the said variable (Δ) reflecting the slippage of the rear wheels is greater than an upper threshold (Δ₊).

8. Braking software containing instructions suitable for being read and stored on a medium, the said instructions being executable by a host computer, **characterized in that** the said software uses a method according to one of Claims 1 to 7.

9. Programmable braking controller, capable of using a method according to one of Claims 1 to 7, in a vehicle fitted with a braking system comprising brake callipers capable of being actuated as a function of a target braking force (F_{target}) and in which at least the actuation of the brake callipers (14, 15) fitted to the rear wheels is decoupled from the pressing of a brake pedal (6), the pressing corresponding to a braking force desired by the driver, the said controller (20) comprising a memory space capable of storing software instructions, a computer capable of executing the said instructions and an input/output interface that can be connected at the input to a plurality of sensors with which the said vehicle is fitted and at the output to at least one calliper actuation unit, the said controller being programmed to comprise:
- a means of detecting an input logic condition (A) capable of testing a braking condition (120) consisting in verifying whether the said brake pedal is pressed;
- a means (140, 150) of determining a base braking force (F_{B}) from the said desired braking force;
- a means (160, 170) of computing a corrected base braking force (F_{C}) capable of correcting the said base braking force so that the corrected base braking force is greater than the base braking force; and,
- a means (200) of transmitting the said corrected braking force as a target braking force for the rear wheels, so that the pitching motion of the said vehicle is reduced during deceleration,
**characterized in that** the said means of detecting an input logic condition (A) is capable of testing a straight line condition (110) consisting in verifying whether a lateral acceleration (a₁) obtained by means of the said sensors is less than a threshold lateral acceleration (a₁₀), and **in that** the said computing means is capable of correcting the said base braking force by applying thereto a multiplicative base gain (G₀) so as to obtain the corrected base braking force, the said base gain (G₀) being an increasing function of an instantaneous velocity (V) of the said vehicle.

10. Programmable braking controller according to Claim 9, **characterized in that** it comprises a modulation means (195, 196, 197) capable of applying a modulation to the said corrected base braking force (F_{C}) to obtain a reference braking force (F_{R}), the said modulation being a function of a variable (Δ) reflecting the slippage of the rear wheels, and the said reference braking force being transmitted as the target braking force (F_{target}) for the rear wheels.

11. Braking system designed to be fitted to a vehicle comprising a plurality of sensors, a braking controller (20), brake calliper actuation units (24, 25), and at least electromechanical brake callipers (14, 15) fitted to the rear wheels of the said vehicle, **characterized in that** the said braking controller is a programmable braking controller according to Claim 9 or Claim 10.

12. Vehicle comprising a braking system **characterized in that** the said braking system is a braking system according to Claim 11.

## Patentansprüche

1. Verfahren zum Abbremsen eines Fahrzeugs, wobei das Fahrzeug mit einem Bremssystem ausgestattet ist, welches Bremssättel aufweist, die mit einer Zielbremskraft (F_{cible}) betätigbar sind, und bei dem wenigstens die Betätigung der Bremssättel (14, 15) der Hinterräder vom Treten eines Bremspedals (6) entkoppelt ist, wobei das Hinabtreten einer vom Fahrer gewünschten Bremskraft entspricht, wobei das Verfahren die folgenden Schritte aufweist:
- Detektieren einer Eingangslogikbedingung, welche wenigstens einen Bremstest (120) aufweist, wobei der Bremstest verifiziert wird, wenn das Bremspedal vom Fahrer betätigt wird; und, sobald die Logikbedingung verifiziert ist (138),
- Bestimmen (140, 150) einer Basisbremskraft (F_{B}) ausgehend von der gewünschten Bremskraft;
- Berechnen einer korrigierten Basisbremskraft (F_{C}), indem man die Basisbremskraft so korrigiert, dass die korrigierte Basisbremskraft größer als die Basisbremskraft ist; und
- Anwenden (200) der korrigierten Basisbremskraft als Zielbremskraft für die Hinterräder, so dass die Nickbewegung des Fahrzeugs beim Bremsen auf der Geraden verringert wird,
**dadurch gekennzeichnet, dass** die Eingangslogikbedingung einen Geradentest (110) aufweist, wobei der Geradentest verifiziert wird, wenn die momentane Seitenbeschleunigung (a₁) des Fahrzeugs kleiner als eine Grenzbeschleunigung (a₁₀) ist, dass die Basisbremskraft (F_{B}) korrigiert wird, indem man sie mit einem Basisfaktor (G₀) so multiplizert, dass man die korrigierte Basisbremskraft (F_{C}) erhält, wobei der Basisfaktor (G₀) eine mit der Momentangeschwindigkeit (V) des Fahrzeugs wachsende Funktion ist, und dass die Schritte, die durchgeführt werden, sobald die Eingangslogikbedingung verifiziert wird, so lange durchgeführt werden, wie die Eingangslogikbedingung verifiziert bleibt.

2. Verfahren gemäß Anspruch 1, **dadurch gekennzeichnet, dass** die Momentangeschwindigkeit, von welcher der Basisfaktor (G₀) abhängt, die bei einer Veränderung der vom Fahrer gewünschten Bremskraft herrschende Momentangeschwindigkeit ist.

3. Verfahren gemäß Anspruch 1 oder Anspruch 2, **dadurch gekennzeichnet, dass** der Basisfaktor (G₀) unterhalb einer unteren Grenzgeschwindigkeit (V₁) in der Nähe von Eins liegt.

4. Verfahren gemäß einem der Ansprüche 1 bis 3, **dadurch gekennzeichnet, dass** der Basisfaktor (G₀) oberhalb einer oberen Grenzgeschwindigkeit (V₂) gleich einer Sättigungsverstärkung (Gₘₐₓ) ist.

5. Verfahren gemäß einem der Ansprüche 1 bis 4, **dadurch gekennzeichnet, dass** das Verfahren einen Schritt der Modulation der korrigierten Basisbremskraft (F_{C}) aufweist, um eine Referenzbremskraft (F_{R}) zu erhalten, wobei die Modulation abhängig von dem Momentanwert einer den Schlupf der Hinterräder repräsentierenden Variablen (Δ) ist und die Referenzbremskraft als Zielbremskraft für die Hinterräder abgegeben wird, wobei man bei dem Modulationsschritt die korrigierte Basisbremskraft (F_{C}) nicht modifiziert, wenn die den Schlupf der Hinterräder repräsentierende Variable (Δ) zwischen einem unteren Grenzwert (Δ₋) und einem oberen Grenzwert (Δ₊) liegt.

6. Verfahren gemäß Anspruch 5, wobei man bei dem Modulationsschritt die korrigierte Basisbremskraft (F_{C}) mit einem Verstärkungsfaktor (G₋), der größer als Eins ist, multipliziert (197), wenn die den Schlupf der Hinterräder repräsentierende Variable (Δ) kleiner als ein unterer Grenzwert (Δ₋) ist.

7. Verfahren gemäß Anspruch 5 oder Anspruch 6, wobei man bei dem Modulationsschritt die korrigierte Basisbremskraft (F_{C}) mit einem Abschwächungsfaktor (G₊), der kleiner als Eins ist, multipliziert (195), wenn die den Schlupf der Hinterräder repräsentierende Variable (Δ) größer als ein oberer Grenzwert (Δ₊) ist.

8. Bremsprogramm, welches lesbare und auf einem Träger speicherbare Instruktionen enthält, wobei die Instruktionen von einem Hostcomputer ausführbar sind, **dadurch gekennzeichnet, dass** das Programm ein Verfahren gemäß einem der Ansprüche 1 bis 7 durchführt.

9. Programmierbare Bremssteuerung, welche zur Durchführung eines Verfahrens gemäß einem der Ansprüche 1 bis 7 geeignet ist, in einem Fahrzeug, das mit einem Bremssystem ausgestattet ist, welches Bremssättel aufweist, die mit einer Zielbremskraft (F_{cible}) betätigbar sind, und bei dem wenigstens die Betätigung der Bremssättel (14, 15) der Hinterräder vom Treten eines Bremspedals (6) entkoppelt ist, wobei das Hinabtreten einer vom Fahrer gewünschten Bremskraft entspricht, wobei die Steuerung (20) einen Speicherraum, der die Instruktionen eines Datenverarbeitungsprogramms speichern kann, einen Rechner, der die Instruktionen ausführen kann, und ein Eingangs/Ausgangs-Interface aufweist, welches am Eingang mit mehreren Sensoren, mit denen das Fahrzeug ausgerüstet ist, und am Ausgang mit wenigstens einer Einheit zur Betätigung des Sattels verbunden ist, wobei die Steuerung so programmiert ist, dass sie folgende Elemente aufweist:
- ein Mittel zur Detektion einer Eingangslogikbedingung (A), welches eine Bremsbedingung (120) überprüfen kann, die darin besteht, zu verifizieren, ob das Bremspedal getreten ist;
- ein Mittel zur Bestimmung (140, 150) einer Basisbremskraft (F_{B}) ausgehend von der gewünschten Bremskraft;
- ein Mittel zum Berechnen (160, 170) einer korrigierten Basisbremskraft (F_{C}), welches in der Lage ist, die Basisbremskraft so zu korrigieren, dass die korrigierte Basisbremskraft größer als die Basisbremskraft ist; und
- ein Mittel zum Ausgeben (200) der korrigierten Bremskraft als Zielbremskraft für die Hinterräder, damit die Nickbewegung des Fahrzeugs während der Verzögerung verringert wird,
**dadurch gekennzeichnet, dass** das Mittel zur Detektion einer Eingangslogikbedingung (A) eine Geradenbedingung (110) prüfen kann, die darin besteht, zu verifizieren, ob eine mittels der Sensoren gemessene Seitenbeschleunigung (a₁) kleiner als eine Grenzwert der Seitenbeschleunigung (a₁₀) ist, und dass das Berechnungsmittel die Basisbremskraft **dadurch** korrigieren kann, dass sie mit einem Basisfaktor (Gₒ) so multipliziert wird, dass man eine korrigierte Basisbremskraft erhält, wobei der Basisfaktor (G₀) eine mit der Momentangeschwindigkeit (V) des Fahrzeugs wachsende Funktion ist.

10. Programmierbare Bremssteuerung gemäß Anspruch 9, **dadurch gekennzeichnet, dass** sie ein Modulationsmittel (195, 196, 197) aufweist, welches der korrigierten Basisbremskraft (F_{C}) eine Modulation aufprägen kann, damit man eine Referenzbremskraft (F_{R}) erhält, wobei die Modulation eine Funktion einer den Schlupf der Hinterräder repräsentierenden Variablen (Δ) ist, und die Bezugsbremskraft als Zielbremskraft (F_{cible}) für die Hinterräder ausgegeben wird.

11. Bremssystem für ein Fahrzeug, welches mehrere Sensoren, eine Bremssteuerung (20), Einheiten zur Betätigung von Bremssätteln (24, 25) und wenigstens elektromechanischen Bremssättel (14, 15) an den Hinterrädern des Fahrzeugs aufweist, **dadurch gekennzeichnet, dass** die Bremssteuerung eine programmierbare Bremssteuerung gemäß Anspruch 9 oder Anspruch 10 ist.

12. Fahrzeug mit einem Bremssystem, **dadurch gekennzeichnet, dass** das Bremssystem ein Bremssystem gemäß Anspruch 11 ist.
